# EUROPEAN PATENT SPECIFICATION

(11) **EP 3 478 814 B1**
(45) Date of publication and mention of the grant of the patent: **07.06.2023**
(21) Application number: 17751120.1
(22) Date of filing: 30.06.2017
(51) Int. Cl.: C12C 11/11, C12C 12/00, C12H 1/22, C12H 1/07

(54) **DRAUGHT BEER WITH A HIGH C02 CONTENT**
FASSBIER MIT HOHEM C02-GEHALT
BIÈRE PRESSION À TENEUR ÉLEVÉE EN CO2

(30) Priority: 01.07.2016 BE 201605552
(43) Date of publication of application: 08.05.2019
(73) Proprietor: Duvel Moortgat NV, 2870 Puurs (BE)
(72) Inventor: NEVEN, Hedwig, 3300 Goetsenhoven (BE); MOORTGAT, Michel, 9830 Sint-Martens-Latem (BE)
(74) Representative: Brantsandpatents bv
(86) International application number: PCT/IB2017/000808
(87) International publication number: WO 2018/002704

(56) References cited:
- WO-A1-2007/071224
- GB-A- 330 327
- Fergus Priest: "Carbonation" In: "Handbook of Brewing", 1 January 2006 (2006-01-01), CRC Press, XP055339473, pages 546-548, the whole document
- DERDELINKCKX G ET AL: "REFERMENTATION IN BOTTLES AND KEGS: A RIGOROUS APPROACH", BRAUWELT INTERNATIONAL, VERLAG HANS CARL GMBH, NUERNBERG, DE, vol. 2, 1 January 1992 (1992-01-01), pages 156-164, XP000570672, ISSN: 0934-9340
- N.N.: "Duvel", , 4 May 2016 (2016-05-04), pages 1-5, XP055766021, Retrieved from the Internet: URL:https://web.archive.org/web/2016050406 2659/https://www.duvel.com/nl-be/het-bier/ duvel [retrieved on 2021-01-18]
- N.N.: "Duvel on draft", , 18 January 2021 (2021-01-18), pages 1-5, XP055766030, Retrieved from the Internet: URL:https://www.duvel.com/en/the-beer/duve l-on-tap [retrieved on 2021-01-18]

## Description

### Technical domain

The invention relates to a beer in a barrel with a high CO₂ content.

### PRIOR ART

Refermenting beers is a natural way of saturating beer with carbon dioxide gas (CO₂). This refermentation generally takes place in the bottle and consists in adding sugars and fresh yeast to the beer just before filling. Refermentation normally takes place at a temperature of between 20°C and 26°C, whereby both alcohol and CO₂ are formed, as well as a whole range of other compounds, including fruit esters, which give the beer a characteristic flavour.

In addition to pouring from the bottle, in many drinking establishments beer is also dispensed from the barrel. Draught beer has the advantage that it has a longer shelf-life as the beer is not exposed to light and therefore no photo-oxidation takes place. As a result a higher beer quality can be assured, and for a relatively long period. Draught beer also gives the consumer greater freedom: i.e. the volume of beer to be filled into a glass is more flexible compared with beer from a bottle. In general draught beer is considered to have more flavour.

GB330327 describes a beer refermented in the barrel, wherein the beer is an "ale" or "stout".

In 1930, in "Carbonation" Ferguson Priest described in the "Handbook of Brewing" that refermentation of a beer can bring about an increase in the CO₂ content. The highest cited CO₂ content is 2.7 volumes of CO₂ per litre of beer, which corresponds to a CO₂ content of 5.33 g/L.

In 1992 Derdelinckx et al. described a method of refermentation of beer in bottles and barrels ("Refermentation in bottles and kegs: A rigorous approach") but with a relatively low CO₂ content.

On 4 May 2016, the Duvel-website disclosed in an article entitld "90 dagen brouwen..." a unique Duvel brewing process to produce Duvel which is refermented in the bottle. The present invention wishes to provide a beer which is of a high-quality nature and provides an optimum flavour experience.

### SUMMARY OF THE INVENTION

The invention relates to a process for producing a refermented beer in a barrel according to claim 1.

A second aspect of the invention relates to a beer in a barrel according to claim 2.

This is the first time that a beer refermented in the barrel and with a high internal CO₂ content is described. The high internal CO₂ content contributes to high quality and optimum taste. In addition, beer in a barrel should have a relatively longer shelf-life than bottled beer and beer in a barrel provides flexibility with regard to the volume of beer in a glass.

### DESCRIPTION OF THE FIGURES

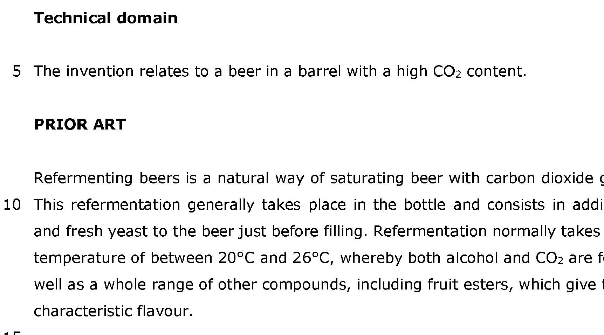

**Figure 1** shows the results of a comparative test relating to the CO₂ content in beer.

### DETAILED DESCRIPTION

The invention relates to a beer that is refermented in a barrel and has a high internal CO₂ content. The beer poured from the barrel is of high quality and has an optimum flavour. Preferably the invention relates to a highly fermented beer.

A first aspect of the invention relates to beer in a barrel, wherein the beer is refermented in the barrel and has an internal CO₂ content greater than or equal to 7 g/L. In particular, the beer should have an internal CO₂ of between 7 and 9 g/L. This CO₂ content in the beer is achieved through a combination of the natural process of (re)fermentation and externally supplied CO₂. The described CO₂ content relates to the content in a beer in an enclosed barrel which is not yet connected to a tapping device.

A beer according to the present invention is of high quality, among other things due to the fact the beer has an attractive and full head after pouring of the beer as well as greater foam stability and more constant bubbling. The beer is also easy to drink and the high CO₂ content contributes to an optimum taste experience.

In the present invention the term "refermentation" is used for the process in which additional yeast and sugars are added to the beer just before filling into the barrel, after which new fermentation occurs in the barrel whereby among other things more alcohol and CO₂ are produced. In particular, refermentation should take place at a temperature of between 20°C and 26°C, preferably at a temperature of between 22°C and 25°C, such as 24°C for a period of minimally 14 days.

The term "internal CO₂ content" indicates the CO₂ of beer in a barrel after refermentation has taken place. This content can be determined by methods known in the prior art, such as by means of a CO₂ meter based on pressure measurement in combination with temperature.

The term "foam stability" here refers to the way in which the volume of the foam head decreases as a function of time after tapping. Here, high foam stability refers to a head which only decreases to a relatively small extent as a function of time, whereas a low foam stability refers to a head whose volume decreases to a relatively great extent as a function of time.

The inventors of the present invention were the first to succeed in providing highly fermented beer in a barrel, in which the quality and taste sensation of the poured beer match or even surpass those of bottled beer. When poured, beer in a barrel should have at least the same degree of carbon dioxide saturation as the same beer refermented in the bottle.

Letting the beer in a barrel referment prevents the beer and the yeast from being exposed to light and temperature fluctuations. Through its larger volume, beer in a barrel is only sensitive to temperature fluctuations to a limited extent. Consequently the beer has a longer shelf life and a reduction in quality, taste, appearance, smell, colour etc. is prevented during the refermentation. Beer in a barrel also allows the consumer to modulate the volume of the tapped bear as desired and/or as required. Beer in a barrel also has the advantage that it can be easily and safely transported. According to a first aspect this is because barrels are less susceptible to damage than bottles, and secondly because for the same volume of beer a barrel takes up less space than the corresponding number of bottles of the same volume of beer. The use of barrels is also more durable than bottles. A barrel is not damaged as quickly as a bottle, a barrel can be easily reused and the reuse of a barrel results in substantially less waste than the (re)use of bottles. In addition it is pointed out that beer in a barrel enjoys greater visibility as tap are usually provided with one or more tap signs stating the name of the brand the beer in a barrel, and also such tap values are generally positioned centrally in a noticeable position in eating or drinking facilities, such as catering establishments, events etc. The increased visibility offers a substantial economic and commercial advantage. Furthermore, in many societies and/or cultures beer in a barrel has always been preferred to beer in bottles.

The beer according to the present invention is characterised by refermentation in the barrel. Here, during the refermentation phase the beer must contain 1 to 2 million live yeast cells per ml. A possible manner of determining the yeast cells is to microscopically count the number of yeast cells in a counting chamber.

The used yeast is selected from the group of Saccharomyces or Brettanomyces.

In addition, during the refermentation the beer must contain 0.1 to 0.8 degrees Plato, preferably 0.1 to 0.5 degrees Plato, most preferably 0.1 to 0.2 degrees Plato of fermentable sugars, preferably glucose and fructose.

Together with the present yeasts, these sugars ensure the production of alcohol and CO₂ as well as esters which give the beer a characteristic taste. After completion of the refermentation, the yeast should die off. The CO₂ content and the pressure in the barrel should remain constant at a constant temperature.

During the refermentation in the barrel the pressure should increase to a maximum level. As a result of this barrels containing the beer must be able to withstand a pressure of at least 7 bars, such as 7 to 10 bars.

One of the problems occurring during the tapping of beer with an internally high CO₂ content is excessive foaming, whereby mainly foam is produced and a good separation between the beer and foam layer is not obtained. When tapped, the beer according to the present invention should have an attractive and full foam head.

The outflow temperature of the bear should 4°C to 6°C. An optimum temperature in combination with a correctly applied tapping pressure is important for avoiding relaxation of the CO₂ during tapping, whereby CO₂ is lost or the internal CO₂ content changes. As has already been stated, this has a direct negative influence on the quality and the taste of the beer.

Preferably the beer should be a blonde beer. In particular, the beer should have an EBC value of between 4 and 8.

In a preferred form according to the present invention the beer should be a Tripel-type beer. The term "Tripel" indicates a heavily overfermented beer with a high percentage of alcohol. The term "Tripel" also indicated beers which have a (triple)double finish or gravity. An example of a Tripel beer is Westmalle Tripel.

The beer according to the invention can also be a Trappist or abbey beer. Understood as "Trappist" is a beer brewed by Cistercian monks and recognised as Trappist beer by the International Trappist Association. Abbey beer denote beers which are connected to an abbey but are not by definition brewed by monks.

The beer in a barrel according to the present invention can be tapped by means of a standard tapping device. In a preferred form the beer in a barrel according to the present invention is tapped by means of a specific tapping installation or device. This tapping device is characterised by the presence of a specifically designed line which ensures that the beer with such an internal CO₂ content can be tapped at the desired pressure whereby a quality glass of beer is obtained (a good, sharply delimited and well-proportioned head which also exhibits a high degree of foam stability and foam density).

In particular, the tapping device must have well-determined dimensions. In particular the lines must have an internal diameter of between 2.5 mm and 3.5 mm, more preferably between 2.8 mm and 3.4 mm, even more preferably between 2.9mm and 3.2 mm, such as 3 mm and a length of between 1.8 m and 2.4 m, preferably between 1.9 m and 2.2 m, such as 2 m. The conditions relating to the diameter and the length of the tap line are crucial for obtaining a quality poured beer in a barrel that has been refermented in the barrel. The inventors have found that outside these ranges the quality of the tapped beer does not meet the predefined requirements (e.g. good foam layer).

A barrel refrigerator is provided to keep the beer at the desired temperature. The temperature of the barrel refrigerator is adjustable and is preferably set to a temperature of between 3 and 5°C, even more preferably between 3.5 and 4.5°C.

The tapping pressure is set to a pressure of between 2 and 3 bars, more preferably between 2.2 and 2.5 bars, for example 2.3 bars. This pressure is provided by an externally connected COzreservoir. The pressure can be adjusted by means of a pressure regulator and read-off by means of a manometer.

Under these circumstances the beer according to the present invention can be tapped in a correct and quality manner.

In another aspect according to the present invention, the present invention also comprises a process for producing refermented beer in a barrel. The process involves the following steps. In a first step a traditional, non-refermented, bear is brewed. This brewing process traditionally includes the following steps: grinding of malt (barley base), mashing, separation of wort and spent grain, boiling and cooling of the wort, adding of yeast, fermentation and storage until a primary or young beer is produced. The primary beer should have an alcohol content of less than 8.5 vol.%, for example 8 vol.% and a CO₂ content of between 2.5 and 3.5 g/l. In a following step the beer is filtered and external CO₂ is added until a CO₂ content of 5 to 7.5% g/l is reached. In a third step additional yeast (between 1 and 2 million live yeast cells per ml) and sugars (glucose and fructose) are added to the beer after which the beer is stored in barrels or casks. The barrels can be wooden barrels. Preferably stainless steel barrels are used.

The beer in a barrel is refermented at a temperature of between 20 and 26°C, preferably at a temperature of between 22 and 25°C, such as 24°C for a period of minimally 14 days.

After refermentation the barrels are cooled to a temperature of 6°C 10°C and preferably 7 to 9°C and the beer is matured for a period of around 6 weeks. This ensures better flavour and aroma development in the beer as well as sedimentation of the yeast.

Barrels are preferably stored upright at a temperature of below 20°C.

Below, the invention will be described by way of non-limiting examples which illustrate the invention and which are not intended for and should not be interpreted as limiting the scope of the invention.

### EXAMPLES

### Example 1 - Features of one form of embodiment of a beer in a barrel

Features of a beer in a barrel:
- internal CO₂ content of enclosed barrel: 8 g/l CO2
- alcohol percentage: 8.5%
- gravity 16.9° plato
- colour: blonde (6 EBC)
- bitterness: 32 EBU
- quantity: 19L in a 20L barrel

### Example 2 - Influence of CO₂ content on beer quality and taste

A volume of beer was filled into three barrels and refermented for a period of three weeks. During the first half of the refermentation period two of the three barrels were shaken twice per day and then degassed to let CO₂ produced as a result of the refermentation escape. Every day during the second half of the refermentation period the first of the two barrels of beer was shaken twice per day and then degassed. After the refermentation period the CO₂ of the beer of the three barrels was determined in triplicate via a CO₂ meter based on pressure measurement in combination with temperature. The beer was then cooled in the barrel to a temperature of 3°C and, from each barrel beer was tapped into three identical glass at a counter-pressure of 2-3 bars and under identical circumstances. After tapping the beer the following parameters were measured:
(i) the height of the foam head of the tapped beer;
(ii) the time in which the foam head of the tapped beer decreased by 90% in height to indicate the foam stability;

Additionally, via a double-blind test set-up, a tapper and consumer of the beer were asked to give a score of 1 to 5. In particular they were asked to give a separate score with regard to (i) the bubbling of the tapped beer, (ii) the density of the foam head of the tapped beer, (iii) the drinkability of the tapped beer and (iv) the taste of the tapped beer. Hereby a higher score indicates greater attractiveness and/or quality of the tapped beer, while a lower score indicates a lower attractiveness and/or quality of the tapped beer.

Figure 1 shows results of the comparative test between beer refermented in the barrel with different CO₂ contents. Figure 1a shows a glass of beer in which the beer was tapped from a barrel containing beer with an internal CO₂ of approximately 7.70 g/l; figure 1b shows a glass or beer in which the beer was taken from a barrel containing beer with an internal CO₂ content of approximately 5.50 g/l; and figure 1c shows a glass of beer in which the beer was tapped from a barrel containing beer with an internal CO₂ content of 3.75 g/l.

From the results (set on in table 1 and figure 1) it is clear that a beer with a higher internal CO₂ content results in a higher foam head and a visually more attractive glass of beer (fuller, sharply delineated head, more constant and optimum bubbling etc.) when tapped at the same conditions as beer refermented in the barrel with a lower CO₂ content. Such beer is considered to be of high quality and optimally drinkable.

**Table1 - Results of comparative tests from example 2. Avg = Average**

| | **Barrel 1** | | | | **Barrel 2** | | | | **Barrel 3** | | | |
|---|---|---|---|---|---|---|---|---|---|---|---|---|
| | 1 | 2 | 3 | **Avg** | 1 | 2 | 3 | **Avg** | 1 | 2 | 3 | **Avg** |
| **CO₂ content (g/l)** | 7.76 | 7.60 | 7.63 | **7.66** | 5.10 | 5.59 | 5.61 | **5.43** | 3.48 | 3.87 | 3.91 | **3.75** |
| **Temperature of beer when tapped (°C)** | 3 | 3 | 3 | **3** | 3 | 3 | 3 | **3** | 3 | 3 | 3 | **3** |
| **Counter-pressure when tapped (bars)** | 2.3 | 2.3 | 2.3 | **2.3** | 2.3 | 2.3 | 2.3 | **2.3** | 2.3 | 2.3 | 2.3 | **2.3** |
| **Height of foam head (cm)** | 6 | 6.5 | 5.5 | **6** | 1 | 2 | 1.5 | **1.5** | 0.1 | 0.1 | 0.1 | **0.1** |
| **Time of shrinkage 90% of head (s)** | 1026 | 978 | 1004 | **1003** | 150 | 99 | 122 | **124** | N/A | N/A | N/A | **N/A** |
| **Bubbling (0-5)** | 4 | 4.5 | 4.5 | **4.33** | 1.5 | 2 | 2 | **1.83** | 0.5 | 0.5 | 0.5 | **0.5** |
| **Density of heat (0-5)** | 5 | 4.5 | 5 | **4.83** | 2.5 | 2.5 | 2 | **2.33** | 0 | 0 | 0 | **0** |
| **Drinkability (0-5)** | 4.5 | 4.5 | 4.5 | **4.5** | 2 | 2 | 2 | **2** | 0.5 | 1 | 1 | **0.83** |
| **Taste sensation (0-5)** | 4.5 | 4.5 | 4.5 | **4.5** | 1.5 | 2.5 | 2 | **2** | 0.5 | 1 | 1 | **0.83** |

**Table2 - Results of double-blind experiment from example 2.**

| | | **Beer refermented in the barrel** | **Beer refermented in the bottle** |
|---|---|---|---|
| Drinkability | | 4.18 | 3.60 |
| Taste | | 4.08 | 3.84 |
| Visual aspect | | 4.22 | 3.81 |
| | - height of foam head | 4.09 | 3.54 |
| | - foam stability | 4.13 | 3.57 |
| | - foam density | 3.98 | 3.64 |
| | - clarity of the beer | 4.18 | 4.03 |
| | - bubbling of the beer | 4.03 | 3.65 |
| Taste sensation (0-5) | | 4.10 | 3.68 |
| **Average** | | **4.11** | **3.71** |

## Claims

1. Method for producing refermented beer in a barrel comprising the production of a young beer, with a CO2 content of between 2.5 and 3.5 g/L and an alcohol content of less than 8.5 vol%, filtering and adding external CO₂ to a CO₂ content of between 5 and 7.5 g/L , adding additional yeasts and sugars to the young beer, and storing of the beer in the barrel, wherein the beer undergoes refermentation in the barrel at a temperature of between 20 and 26°C and preferably between 22 and 25°C for a period of minimally 14 days, such that said beer obtains a CO₂ content greater than or equal to 7g/L and an alcohol content of between 7 and 10% and wherein
after refermentation the beer is matured for at least six weeks at a temperature situated between 6 and 10°C,
wherein at the start of refermentation in the barrel the beer contains 0.1 to 0.8 degrees plato fermentable sugars,
wherein during refermentation in the barrel the beer has 1 to 2 million live yeast cells per ml, the yeast used is selected from the group of Saccharomyces or Brettanomyces.

2. Beer in a barrel, obtainable via the method according to claim 1, **characterised in that** the beer is refermented in a barrel able to withstand at least 7 bar, has an internal CO₂ content of between 7 and 9 g/L, an alcohol content of between 7 and 10%, an outflow temperature of 4 to 6 °C and wherein the tapping pressure of said beer is between 2 and 3 bar.

3. The beer in a barrel according to claim 2, **characterised in that** the beer has a EBC value of between 4 and 8.

## Patentansprüche

1. Verfahren zum Produzieren nachgegärten Biers in einem Fass, umfassend die Produktion eines Jungbiers mit einem CO₂-Gehalt zwischen 2,5 und 3,5 g/l und einem Alkoholgehalt von weniger als 8,5 Vol.-%, das Filtern und Hinzufügen externen CO₂ auf einen CO₂-Gehalt zwischen 5 und 7,5 g/l, das Hinzufügen zusätzlicher Hefen und Zucker zu dem Jungbier und das Lagern des Biers in dem Fass, wobei das Bier in dem Fass einer Nachgärung bei einer Temperatur zwischen 20 und 26 °C und vorzugsweise zwischen 22 und 25 °C für eine Zeitspanne von mindestens 14 Tagen unterliegt, so dass das Bier einen CO₂-Gehalt von mehr oder gleich 7 g/l und einen Alkoholgehalt zwischen 7 und 10 % erhält, und wobei das Bier nach der Nachgärung für mindestens sechs Wochen bei einer Temperatur zwischen 6 und 10 °C nachgereift wird,
wobei das Bier zu Beginn der Nachgärung in dem Fass 0,1 bis 0,8 Grad Plato fermentierbare Zucker enthält,
wobei das Bier während der Nachgärung in dem Fass 1 bis 2 Millionen lebende Hefezellen pro ml aufweist, wobei die verwendete Hefe aus der Gruppe von Saccharomyces oder Brettanomyces ausgewählt wird.

2. Bier in einem Fass, erhältlich mittels des Verfahrens nach Anspruch 1, **dadurch gekennzeichnet, dass** das Bier in einem Fass nachgegärt wird, das in der Lage ist, mindestens 7 bar standzuhalten, einen internen CO₂-Gehalt zwischen 7 und 9 g/l, einen Alkoholgehalt zwischen 7 und 10 %, eine Auslauftemperatur von 4 bis 6 °C aufweist und wobei der Zapfdruck des Biers zwischen 2 und 3 bar liegt.

3. Bier in einem Fass nach Anspruch 2, **dadurch gekennzeichnet, dass** das Bier einen EBC-Wert zwischen 4 und 8 aufweist.

## Revendications

1. Procédé de production de bière refermentée en fût comprenant la production d'une bière jeune, avec une teneur en CO₂ comprise entre 2,5 et 3,5 g/L et une teneur en alcool inférieure à 8,5 % vol, la filtration et l'ajout de CO₂ externe jusqu'à une teneur en CO₂ comprise entre 5 et 7,5 g/L, l'ajout de levures et de sucres supplémentaires à la bière jeune, et stockage de la bière dans le fût, dans lequel la bière subit une refermentation dans le fût à une température comprise entre 20 et 26 °C et de préférence entre 22 et 25 °C pendant une durée minimale de 14 jours, de sorte que ladite bière obtienne une teneur en CO₂ supérieure ou égale à 7 g/L et une teneur en alcool comprise entre 7 et 10 % et dans lequel
après la refermentation, la bière est maturée pendant au moins six semaines à une température située entre 6 et 10 °C,
dans lequel, au début de la refermentation dans le fût, la bière contient 0,1 à 0,8 degrés plato de sucres fermentescibles,
dans lequel, pendant la refermentation dans le fût, la bière contient 1 à 2 millions de cellules de levure vivantes par ml, la levure utilisée étant choisie dans le groupe des Saccharomyces ou des Brettanomyces.

2. Bière en fût, susceptible d'être obtenue par le procédé selon la revendication 1, **caractérisée en ce que** la bière est refermentée dans un fût capable de supporter au moins 7 bars, présente une teneur interne en CO₂ comprise entre 7 et 9 g/L, une teneur en alcool comprise entre 7 et 10 %, une température de sortie de 4 à 6 °C et dans laquelle la pression de soutirage de ladite bière est comprise entre 2 et 3 bars.

3. Bière en fût selon la revendication 2, **caractérisée en ce que** la bière a une valeur EBC comprise entre 4 et 8.
